# EUROPEAN PATENT APPLICATION

(11) **EP 4 194 932 A1**
(43) Date of publication of application: **14.06.2023**
(21) Application number: 21306743.2
(22) Date of filing: 10.12.2021
(51) Int. Cl.: G02C 7/02

(54) **AN OPHTHALMIC LENS AND METHOD FOR FORMING AN OPHTHALMIC LENS**

(71) Applicant: Essilor International, 94220 Charenton-le-Pont (FR)
(72) Inventor: JALLOULI, Aref, Schrewsbury, 01545 (US); CHIU, Hao Wen, Holden, 01520 (US); FROMENTIN, Pierre, 10240 Bangkok (TH); MARION, Laurie, 10120 Bangkok (TH)
(74) Representative: Jacobacci Coralis Harle

(57) **Abstract**

The present disclosure relates to ophthalmic lenses for correction of myopia. In particular, the present disclosure relates to an ophthalmic lens, comprising a first layer having microstructures on a first surface of the first layer, the microstructures on the first surface of the first layer being formed in a pattern, a material of the first layer being a thermoplastic material; and a second layer formed on the first surface of the first layer, wherein a glass transition temperature of the first layer is higher than a glass transition temperature of the second layer.

## Description

### FIELD OF THE DISCLOSURE

The present disclosure relates to an ophthalmic lens having encapsulated optical elements.

### DESCRIPTION OF THE RELATED ART

Myopia, also known as near-sightedness or short-sightedness, is a condition of the eye where the light that enters the eye is not focused directly on the retina. Instead, the light that enters the eye is focused in front of the retina, causing the image that the individual observes to be in or out of focus depending on a distance of an object from the eye of the individual. For instance, when an object is a distant object, the observed object will be out of focus while, when the object is a near object, the observed object will be in focus.

Optical articles, such as ophthalmic lenses, can be used to correct refractive errors of the eye. Such errors can include, among others, myopia, hyperopia, presbyopia, and astigmatism. Some ophthalmic lenses include optical elements such as microlenses which can facilitate correction of these refractive errors. For example, microlenses can provide a positive addition value to focus part of the incoming light in front of the retina and thereby control myopia evolution.

While effective in theory, in practice, optical elements are often disposed on an outer lens surface and, thus, have limited protection from and are susceptible to damage. Some lenses include a coating, such as a hard coating or varnish, which is integrated with the optical lens in order to protect the optical elements. These coatings, however, may not provide adequate protection of the optical elements. Moreover, these coatings can alter the shape and the optical design of the optical elements. For example, curing of a hard coating may result in undue stress being applied to the optical elements. As a result, the optical elements may no longer provide the optical target they were designed to meet.

Accordingly, there is a need in the art for optical articles configured to provide adequate optical element protection without altering the optical design thereof.

The foregoing "Background" description is for the purpose of generally presenting the context of the disclosure. Work of the inventors, to the extent it is described in this background section, as well as aspects of the description which may not otherwise qualify as prior art at the time of filing, are neither expressly or impliedly admitted as prior art against the present disclosure.

### SUMMARY

The present disclosure relates to a method of forming an ophthalmic lens such as defined in the set of claims.

According to an embodiment, the present disclosure further relates to an ophthalmic lens, comprising a first layer having microstructures on a first surface of the first layer, the microstructures on the first surface of the first layer being formed in a pattern, a material of the first layer being a thermoplastic material; and a second layer formed on the first surface of the first layer, wherein a glass transition temperature of the first layer is higher than a glass transition temperature of the second layer.

Especially, a material of the second layer is a thermoset material or a thermoplastic material.

According to an embodiment, the present disclosure further relates to a method such as defined in the set of claims for forming an ophthalmic lens having encapsulated lenslets, comprising providing a first layer within a cavity of a forming chamber, the first layer having microstructures on a first surface of the first layer, the microstructures on the first surface of the first layer being formed in a pattern, a material of the first layer being a thermoplastic material; flowing a second material into the cavity of the forming chamber and into contact with the first surface of the first layer; and setting the second material to form a second layer on the first surface of the first layer, wherein a glass transition temperature of the first layer is higher than a glass transition temperature of the second layer.

According to an embodiment, the present disclosure further relates to a method for forming an ophthalmic lens, comprising providing a first layer within a cavity of a forming chamber, the first layer having microstructures on a first surface of the first layer, the microstructures on the first surface of the first layer being formed in a pattern; flowing a thermoset material into the cavity of the forming chamber and into contact with the first surface of the first layer and a second surface of the first layer, the second surface of the first layer being opposite the first surface of the first layer; and curing the thermoset material to form a second layer on the first surface of the first layer and a third layer on the second surface of the first layer, wherein a glass transition temperature of the first layer is higher than a glass transition temperature of each of the second layer and the third layer.

The foregoing paragraphs have been provided by way of general introduction, and are not intended to limit the scope of the following claims. The described embodiments, together with further advantages, will be best understood by reference to the following detailed description taken in conjunction with the accompanying drawings.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
FIG. 1 is a schematic of a forming chamber, according to an exemplary embodiment of the present disclosure;
FIG. 2 is a flow diagram of a method for forming an ophthalmic lens, according to an exemplary embodiment of the present disclosure;
FIG. 3A is an illustration of a portion of an ophthalmic lens, according to an exemplary embodiment of the present disclosure;
FIG. 3B is an illustration of a portion of an ophthalmic lens, according to an exemplary embodiment of the present disclosure;
FIG. 3C is an illustration of a portion of an ophthalmic lens, according to an exemplary embodiment of the present disclosure;
FIG. 3D is an illustration of a portion of an ophthalmic lens, according to an exemplary embodiment of the present disclosure;
FIG. 4A is an illustration of a portion of an ophthalmic lens, according to an exemplary embodiment of the present disclosure;
FIG. 4B is an illustration of a portion of an ophthalmic lens, according to an exemplary embodiment of the present disclosure;
FIG. 5A is an illustration of a portion of an ophthalmic lens, according to an exemplary embodiment of the present disclosure;
FIG. 5B is an illustration of a portion of an ophthalmic lens, according to an exemplary embodiment of the present disclosure;
FIG. 6A is an illustration of a portion of an ophthalmic lens, according to an exemplary embodiment of the present disclosure;
FIG. 6B is an illustration of a portion of an ophthalmic lens, according to an exemplary embodiment of the present disclosure; and
FIG. 7 is a graphic illustration of microlens global power averages of an ophthalmic lens, according to an exemplary embodiment of the present disclosure;
FIG. 8 is a flow diagram of a method for forming an ophthalmic lens, according to an exemplary embodiment of the present disclosure;
FIG. 9 is an optical image of the PC/PMMA composite lens, according to an embodiment of the present disclosure;
FIG. 10 is an optical image of the PMMA/PC composite lens as comparative example;
FIG. 11A is an optical image of the PC/Durabio composite lens, according to an embodiment of the present disclosure;
FIG. 11B is a graph of the global power average of the microlenses in each ring of an ophthalmic lens, according to an embodiment of the present disclosure; and
FIG. 12 is a graphic illustration of microlens global power averages of an ophthalmic lens, according to a comparative example.

### DETAILED DESCRIPTION

The terms "a" or "an", as used herein, are defined as one or more than one. The term "plurality", as used herein, is defined as two or more than two. The term "another", as used herein, is defined as at least a second or more. The terms "including" and/or "having", as used herein, are defined as comprising (i.e., open language). Reference throughout this document to "one embodiment", "certain embodiments", "an embodiment", "an implementation", "an example" or similar terms means that a particular feature, structure, or characteristic described in connection with the embodiment is included in at least one embodiment of the present disclosure. Thus, the appearances of such phrases or in various places throughout this specification are not necessarily all referring to the same embodiment. Furthermore, the particular features, structures, or characteristics may be combined in any suitable manner in one or more embodiments without limitation.

The terms "wafer" and "laminate" may be used interchangeably to refer to a similar structure. Moreover, the terms "optical lens", "ophthalmic lens", and "corrective lens", and plural forms thereof, may be used interchangeably to refer to a similar structure.

The terms "about" and "approximately" are defined as being close to as understood by one of ordinary skill in the art. In one non-limiting embodiment the terms are defined to be within 10%, preferably, within 5%, more preferably, within 1%, and most preferably, within 0.5%.

Recently, efforts in addressing the progression of myopia have included providing optical microstructures directly on surfaces of corrective lenses. The optical microstructures may be microlenses, for instance, that redirect part of the incoming light to the retina or to a position relative to the retina. To this end, the use of microlenses on the surface of a regular single vision lens to introduce peripheral defocus has been shown to be effective in slowing the progression of myopia. Microlenses are used in other applications as well. For example, microlenses are used in digital projectors, imaging devices (e.g., photocopiers, mobile-phone cameras), microscopes (e.g., for uniform illumination, displays, and for improving light collection efficiency of charge-coupled device arrays), among other applications.

Optical microstructures may include microlenses or microlenslets or any other type of structure or elements having physical Z deformation/height between 0.1µm-50µm and width/length between 0.5µm-1.5mm. These structures preferably have periodical or pseudo periodical layout but may also have randomized positions. The preferred layout for microstructures is a grid with constant grid step, honeycomb layout, multiple concentric rings, and contiguous (e.g., no space in between) microstructures. These structures may provide optical wave front modification in intensity, curvature, or light deviation, where the intensity of wave front is configured such that structures may be absorptive and may locally absorb wave front intensity with a range from 0% to 100%, where the curvature is configured such that the structure may locally modify wave front curvature with a range of +/- 20 Diopters, and light deviation is configured such that the structure may locally scatter light with angle ranging from +/- 1° to +/- 30°. A distance between structures may range from 0 (contiguous) to 3 times the structure in X and/or Y size (separate microstructures).

Though effective, optical microstructures have been, to now, incorporated directly on surfaces of corrective lenses. The optical microstructures may be engraved, etched, or embossed directly on either a convex surface of the corrective lens (e.g., a lens surface opposite to a lens surface adjacent to an eye of a wearer) or a concave surface of the corrective lens (e.g., a lens surface adjacent to an eye of a wearer). In one instance, this arrangement may lead to scratching or other damage to the optical microstructures as a result of everyday use. Moreover, by creating the optical microstructures directly on a lens surface, a unique design may be needed for each lens substrate material as each optical microstructure design is dependent on a change in refractive index between the optical microstructure and a surrounding medium, every lens substrate material requiring a unique set of optical designs. In this way, each lens substrate material may require a unique optical microstructure architecture and arrangement.

Further to the above, casting of thermoset lenses with optical microstructures on the surface presents technical challenges when integrated in an optical lens. For instance, optical microstructures, or microlenses, are subject to different amounts of shrinkage when different monomers are used. Additionally, different amounts of shrinkage may be experienced within a same monomer when the aspect ratio between a center of the lens and the edge of the lens is high. This, particularly, is an issue for optical microstructures with very small dimensions. Such issues will affect the microlens design in the final product and may require multiple iterations of mold design change in order to reach the final desired design. Moreover, having microlenses on a lens surface exposes the microlenses to alteration by hard coating, which must also be accounted for in designing for and achieving the final design product.

According to an embodiment, the present disclosure provides an ophthalmic lens having encapsulated optical microstructures that retain their structure following casting and hard coating. This includes a functional wafer (i.e.: first layer) having optical microstructures on a surface thereof. The functional wafer, which may be a thermoplastic, does not change shape during the polymerization cycle of a thermoset monomer brought into contact with a surface of the functional wafer having the optical microstructures thereon. Further, such encapsulation of the optical microstructures by the thermoset monomer avoids issues presented by hard coating.

In an embodiment, the present disclosure provides, by injection molding, roll-to-roll hot embossing, or through films and/or laminates, a microstructured thermoplastic wafer having a glass transition temperature higher than a glass transition temperature of a thermoset material to this end, the thermoplastic wafer can be positioned inside a casting cavity of a forming chamber, against an inside surface of a mold of the forming chamber or used as a mold within the forming chamber (e.g., either against a front mold or as a mold that will be kept after removal of a back mold). The thermoplastic wafer can be oriented such that at least a surface of the thermoplastic wafer having optical microstructures is exposed in order to be brought into contact with thermoset monomer (i.e.: second layer) when the thermoset monomer is introduced to the cavity of the forming chamber (alternatively, the second layer may be a thermoplastic). In this way, the optical microstructures can be encapsulated within the final optical lens design. In one instance, both surfaces of the thermoplastic wafer can be exposed to thermoset monomer, the thermoplastic wafer thereby being sandwiched therein. After casting and polymerization of the thermoset monomer, the casting mold(s) can be removed and the resulting dual material lens (thermoset/thermoplastic) has encapsulated microstructures. These microstructures have the exact same design as the one used in the thermoplastic wafer and do not change their shapes with respect to different amounts of monomer shrinkage during casting or as result of further lens processing.

The refractive index of the thermoplastic wafer (RI_{Wafer} also named RI_{first layer}) can be different from the refractive index of the lens (RI_{Lens} also named RI_{second layer}) in order for the microlenses to have optical powers, i.e., ΔRI = RI_{Wafer} - RI_{Lens} ≠ 0.

Typically, the difference between the refractive index of the thermoplastic wafer (RI_{Wafer} also named RI_{first layer}) and the refractive index of the lens (RI_{Lens}, also named RI_{second layer}) is equal to or higher than 0.01, preferably equal to or higher than 0.04 and typically equal to or higher than 0.05, such as 0.07.

According to the invention, a "difference between the refractive index of the thermoplastic wafer (RI_{Wafer}) and the refractive index of the lens (RI_{Lens}) equal to or higher than 0.01" includes the following values and and/or any intervals comprised between these values (limits included): 0.01; 0.02; 0.03; 0.04; 0.05; 0.06; 0.07; 0.08; 0.09; 0.1, 0.2, 0.3, etc.

In an example, the thermoplastic wafer may be a Durabio^{™} microstructured wafer arranged between or on a surface of, as a thermoset monomer (i.e., thermoset lens), an MR8 lens. A differential refractive index (*ΔRI*) between the thermoset monomer and the thermoplastic wafer may be ∼0.1.

In another example, the thermoplastic wafer may be a polycarbonate microstructured wafer arranged between or on a surface of, as a thermoset monomer (i.e., thermoset lens), an MR7 lens. A (Δ*RI*) between the thermoset monomer and the thermoplastic wafer may be ∼0.07.

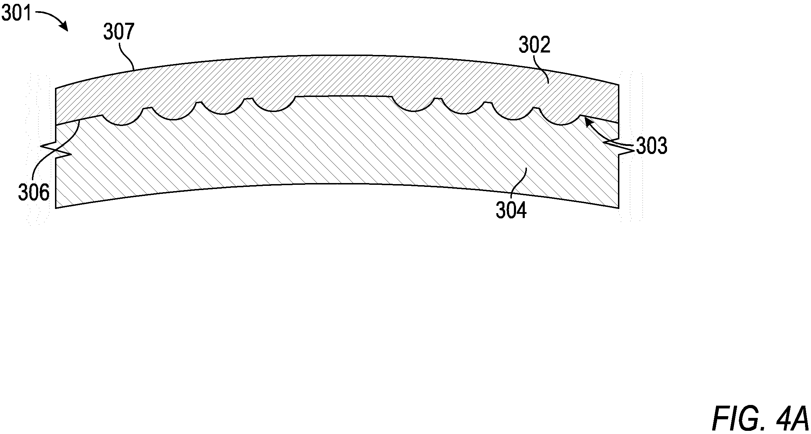

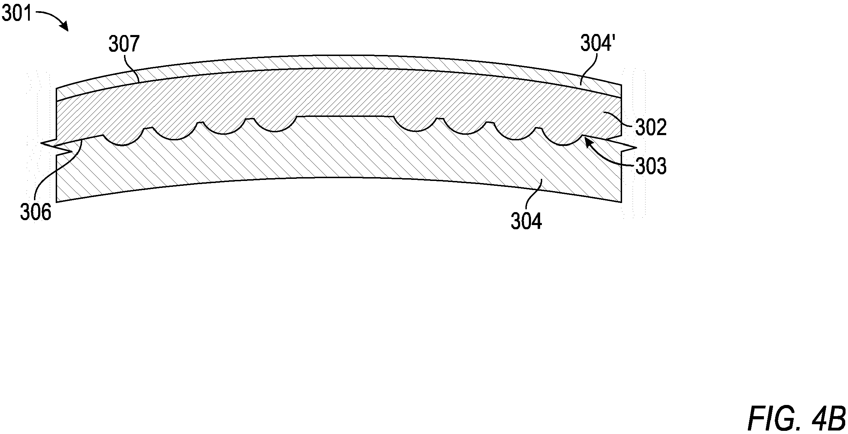

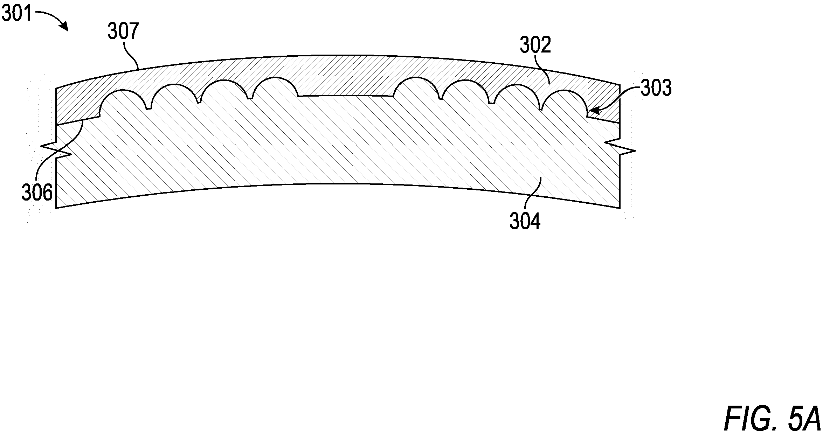

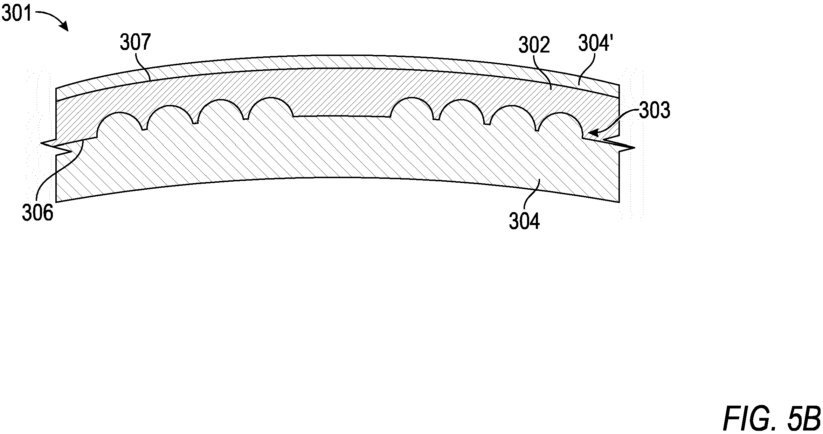

In an embodiment, for myopia control, the powers of the optical microstructures can be positive to provide peripheral defocuses that slow down the progression of myopia. When ΔRI > 0, the optical microstructures on the wafer can be convex to have positive powers, such as those of FIGs. 4A and 4B. When ΔRI < 0, the optical microstructures on the wafer can be concave to have positive powers, such as those of FIGs. 5A and 5B.

In an embodiment, the power of the optical microstructures is also a function of the radius, cylindericity, and/or asphericity that ultimately defines each optical microstructure's shape. Thus, maintaining the shape integrity of the optical microstructures under the high heat and high pressure of injection overmolding can help to preserve the optical design. It also entails ensuring the interface between the wafer and the lens is clear and well-defined to have high optical fidelity. In addition, bonding between the wafer and the lens can be sufficiently strong to survive the hard multi-coat (HMC) and Rx surfacing, edging, and mounting processes.

In an embodiment, to maintain the optical microstructures' shape integrity, the thermal resistance of the wafer material can be greater than that of the lens material to withstand the high heat and pressure of injection overmolding or high curing temperature of thermoset casting. For a plastic material, its thermal resistance can be characterized by the glass transition temperature (T_{g}). The higher the T_{g} the higher the heat resistance. Hence, the glass transition temperature of the wafer (T_{g, Wafer}, also named T_{g First layer}) has to be greater than that of the lens (T_{g, Lens}, also named T_{g Second layer}) in order to prevent the microlenses from deforming. It is also much desired to have the T_{g, Wafer} at least 5°C above T_{g, Lens}, i.e., T_{g, Wafer} > T_{g, Lens} + 5°C.

According to the invention, "at least 5°C between T_{g, Wafer} and Tg _{Lens}" includes the following values and and/or any intervals comprised between these values (limits included): 5; 6; 7; 8; 9; 10; 11; 12; 13; 14; 15; 16; 17; 18; 19; 20; 21; 22; 23; 24; 25; 26; 27; 28; 29; 30; 35; 40; 45; 50; 55; 60; 65; 66; 67; 68; 69; 70; etc. According to an embodiment, the T_{g, wafer} is at least 8°C, preferably at least 10°C, especially at least 15°C and typically at least 20°C above T_{g, Lens}.

In an embodiment, to achieve a clear and well-defined interface and to obtain a strong bond, the wafer material and the lens material can include the same or similar functional groups in their repeating chemical structure units to have the required compatibility. Clear thermoplastics having an ester group -O-C(=O)- including carbonate ester -O-C(=O)-O- are compatible with each other. Some examples include polycarbonate, poly(methyl methacrylate) (PMMA), and copolyester among others. Clear thermoplastics having an amide group -C(=O)-N= are compatible with each other. Some examples include polyamide and polyurethane.

According to an embodiment, the present disclosure provides the ability to make a thermoset lens having encapsulated microstructures, the thermoset lens being able to be coated with any coating, the coating having no effect on the design of the microstructures, the encapsulation of the microstructures enhancing the mechanical properties of the lens (e.g., impact resistance).

In an embodiment, the present disclosure obviates the need to generate microstructured glass molds for casting. Further, when the thermoplastic wafer is used as a mold component, the present disclosure provides a means to use ultraviolet polymerization through transparent molds.

According to an embodiment, the present disclosure provides the opportunity to introduce light filters into the ophthalmic lens via the thermoplastic wafer.

According to an embodiment, the present disclosure allows for a reduction in unit cost of a microstructured thermoplastic wafer (e.g., polycarbonate (PC) wafer) with increased volume of thermoset lenses.

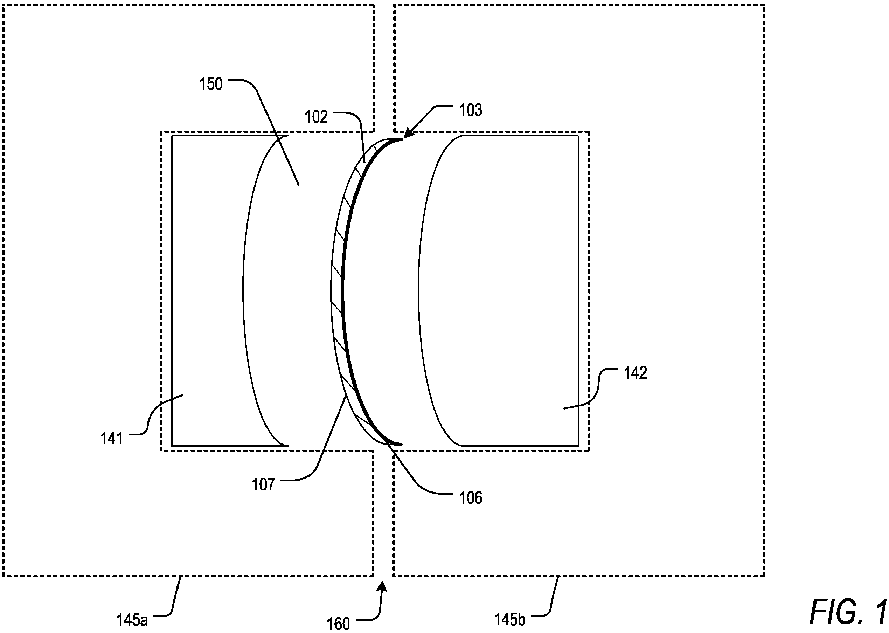

Referring now to the Drawings, FIG. 1 provides a schematic of a forming chamber, or molding device, for incorporating the thermoplastic wafer into the optical lens.

The molding device can include a first mold side 145a, a second mold side 145b, a concave mold insert 141, and a convex mold insert 142. The first mold side 145a and the second mold side 145b can each include a hollow portion, wherein the concave mold insert 141 and the convex mold insert 142 can be removably disposed therein. In an embodiment, either or both of the concave mold insert 141 and the convex mold insert 142 can be replaced by a thermoplastic wafer, the thermoplastic wafer thereby creating a cavity within which thermoset monomer may be introduced.

As shown in FIG. 1, and assuming the mold inserts are retained, the first mold side 145a including the concave mold insert 141 can be configured to couple with the second mold side 145b including the convex mold insert 142. Upon coupling, the concave mold insert 141 and the convex mold insert 142 can form a cavity 150 connected to a hollow line 160 formed by the coupling of the first and second mold sides 145a, 145b. The hollow line 160 can be configured to receive a monomer or a prepolymer, for example, via a screw feeder or similar device. In the example, a wafer 102 (such as, but not limited to, e.g., a thermoplastic wafer or a thermoset wafer) having optical microstructures 103 can be arranged within the cavity 150. In FIG. 1, the optical microstructures 103 are on a first surface 106, or a concave surface 106 of the wafer 102, the wafer 102 having a second surface, or a convex surface 107, opposite the concave surface 106. During forming, and upon placement of the wafer 102 in the cavity 150, a second layer (such as, but not limited to, e.g., a thermoset layer) may be formed by flowing thermoset monomer into the cavity 150 via the hollow line 160. It may be appreciated that a thermoplastic layer for the second layer (instead of the thermoset layer for the second layer) may instead be formed by flowing a thermoplastic material into the cavity 150. Notably, a glass transition temperature of the wafer 102 is greater than a respective glass transition temperature of the thermoset layer, thus allowing the thermoset monomer to be flowed and cured without disrupting the structure of the wafer 102. Depending upon the placement of the wafer 102 (e.g., against the concave mold insert 141, against the convex mold insert 142, spaced between the concave mold insert 141 and the convex mold insert 142), the thermoset monomer may be allowed to fill the remaining space of the cavity 150. In an example, the thermoset monomer may be flowed into contact only with the concave surface 106 of the wafer 102. Upon curing, the optical microstructures 103 on the concave surface 106 of the wafer 102 may then be encapsulated by the thermoset layer.

In an embodiment, a curvature of the concave mold insert 141 and a curvature of the convex mold insert 142 contribute to a lens power of the resulting lens. In an embodiment, for a semi-finished lens, a curvature along a concave side of the optical lens is fixed and the convex side of the optical lens can be modified after molding, for example via grinding and polishing. Note that multiple lines for receiving the monomer can be connected, such that an injection of the monomer from a source can fill multiple mold devices with a single injection and allow for parallel fabrication of multiple lenses.

In an embodiment, and prior to placement in the molding device, the wafer 102 can be thermoformed into a spherical dome shape by, for example, a thermoforming machine. It may be appreciated that known devices and methods can be used to thermoform the wafer 102. For instance, a LEMA-manufactured machine that incrementally increases the curvature of a flat wafer under applied heat can be used.

In an embodiment, the optical lens may include thermoset polyurethane, allyl diglycol carbonate, polythiourethane, episulfur polymers, epoxy, poly(meth)acrylates, polythiomethacrylates, or combinations thereof, and may be typically poly(meth)acrylates.

In an embodiment, the wafer 102 may be one of a variety of suitable base substrates, including (meth)acrylic (co)polymers, especially methyl PMMA, polyvinylbutyral (PVB), polycarbonates, thermoplastic polyurethanes (TPU), thermoplastic copolymers of ethylene and vinyl acetate, polyesters such as polyethylene terephthalate (PET) or polybutylene terephthalate (PBT), copolymers of polycarbonates and polyesters, copolymers of cycloolefins such as copolymers of ethylene and norbornene or ethylene and cyclopentadiene, and combinations thereof. As used herein a "(co)polymer" refers to a copolymer or a polymer. A (meth)acrylate is an acrylate or a methacrylate.

According to an embodiment, the wafer 102 is in polycarbonate (PC).

According to the invention, a "polycarbonate" (PC) refers to homopolycarbonates, copolycarbonates, and block copolycarbonates. Polycarbonates may be aromatic or nonaromatic. Aromatic polycarbonates are commercially available, for example, from Sabic under the trade name Lexan^{™}, from Teijin under the trade name Panlite^{®}, from Covestro under the trade name Makrolon^{®} and from Mitsubishi Engineering-Plastics under the trade name lupilon^{™}. Non aromatic polycarbonates are commercially available, for example from Mitsubishi Chemical Corporation under the trade name Durabio^{™}.

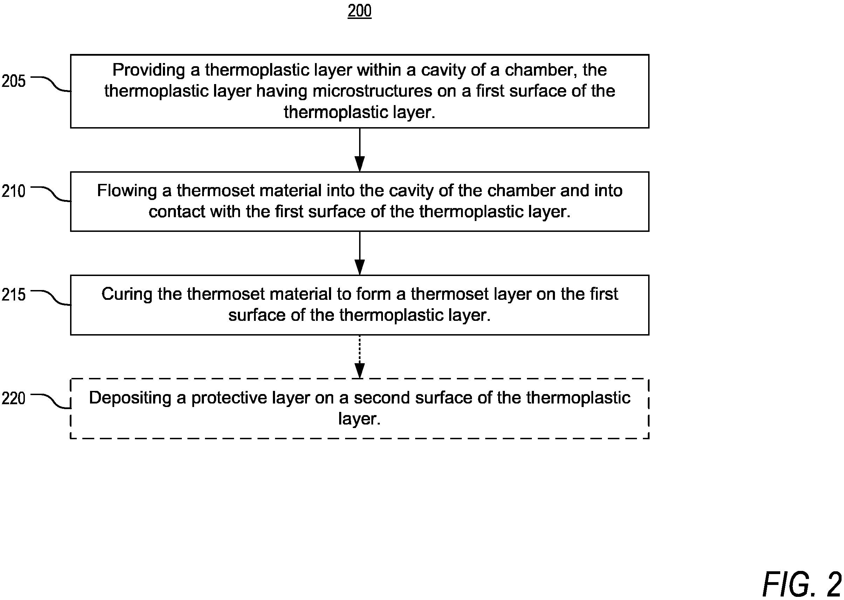

With that, and with reference now to FIG. 2, a method for forming an ophthalmic lens, according to an exemplary embodiment of the present disclosure, will be described.

FIG. 2 provides a description of method 200 for forming an ophthalmic lens having optical microstructures encapsulated therein.

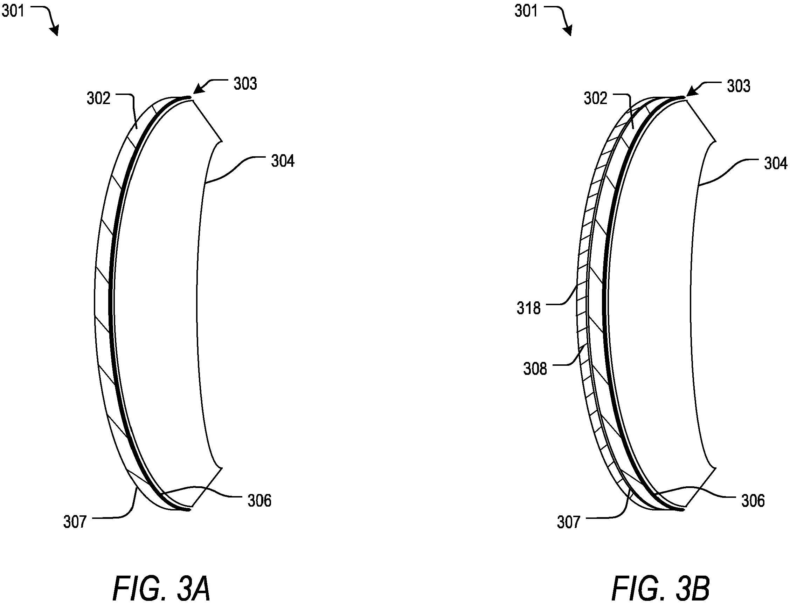

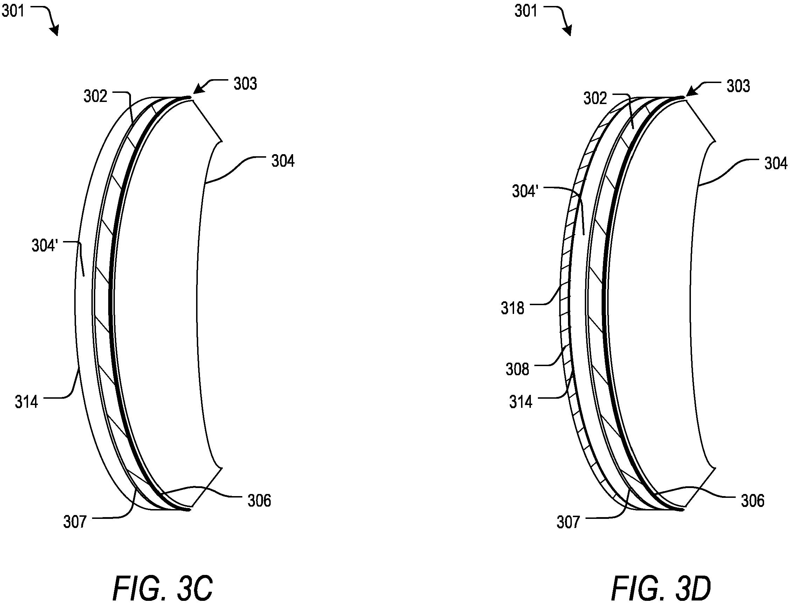

At step 205 of method 200, a first layer (e.g., a thermoplastic layer or a thermoset layer) may be provided with a cavity of a forming chamber, such as that described with reference to FIG. 1. The first layer may have a first surface and a second surface, the first surface having optical microstructures formed thereon and the second surface being opposite the first surface. The first layer may be arranged within the cavity of the forming chamber based on properties of a desired optical lens to be generated. For instance, with brief reference to FIG. 3A and FIG. 3B, the desired optical lens may have a second layer (e.g., a thermoplastic layer or a thermoset layer) in contact with only the first surface of the first layer. Accordingly, the first layer may be provided within the cavity of the forming chamber and against a concave molding insert. In another instance, with brief reference to FIG. 3C and FIG. 3D, the desired optical lens may have a second layer (e.g., a thermoplastic layer or a thermoset layer) in contact with both of the first surface of the first layer and the second surface of the first layer. Accordingly, the first layer may be provided within the cavity of the chamber of the forming chamber and spaced between a concave molding insert and a convex molding insert.

Optionally, an adhesion-promoting layer may be provided on the first surface of the first layer in order to 'prime' the first layer to bond with a thermoset monomer or a thermoplastic material of the second layer. Such modification will be described in more detail with reference to subsequent figures.

Alternatively, the optical microstructures may be formed on the second surface of the first layer and the second layer can be formed thereon.

In an embodiment, each of the optical microstructures on the first surface of the first layer may have a dimensional height, a dimensional width, and may be separated from an adjacent one of the optical microstructures a predetermined distance that defines an area between the optical microstructures. Each area between the optical microstructures may have a dimensional height defining a distance between the first surface of the first layer and a base of each of the optical microstructures. Each of the optical microstructures may have a variety of shapes including hemispherical, rectangular, cylindrical, pyramidal, circular, elliptical, and prismatic, among others, as demanded by a visual requirement. The curvature of each of the optical microstructures may be linear, curvilinear, or a combination thereof.

In an embodiment, the optical microstructures may be formed by one of a plurality of methods. In an instance, a nickel-platinum plated-shim or nickel-silicon plated-shim may be used to deboss a given optical microstructure architecture and design on the first surface of the first layer. In another instance, energy-assisted imprinting may be used to stamp into the first surface of the first layer to dispose the optical microstructures therein. The imprinting may be aided by stamping into a thin coated layer of reactive material (e.g., energy-curable material, reactive, crosslinkable, etc.) or phase-changing material (e.g., liquid to crystalline solid, liquid crystalline material) to solidify the optical microstructure into the first surface of the first layer. For instance, the imprinting may use an ultraviolet process, wherein a thin-coated layer of ultraviolet-curable material is applied to the first surface of the first layer, a replication stamp is used to generate a debossed pattern of optical microstructures and is then cured by ultraviolet light to solidify a pattern of the re optical microstructures into the first surface of the first layer. While an ultraviolet process may be used, in an embodiment, thermal processes as well as E-beam processes may also be used.

In an embodiment, photolithography and/or direct write additive manufacturing may also be used to generate optical microstructures within a first surface of a thermoplastic.

In an embodiment, photolithography and/or direct write additive manufacturing may also be used to generate optical microstructures within a first surface of a thermoset.

In an embodiment, injection molding may also be used to produce a thermoplastic layer with optical microstructures within a first surface of the thermoplastic.

In an embodiment, thermoset casting may also be used to produce a thermoset layer with optical microstructures within a first surface of the thermoset.

In an embodiment, the above-described processes may generate recessed optical microstructures (i.e., negative pattern) that may be the same material or a different material from the first layer. A roll or flat plate stamp that has a mirror image (i.e., positive) of the debossed pattern of optical microstructures may be used as a template to create the pattern in fluid UV curable material. UV curing of the material may follow in order to set the pattern.

In view of the above, it can be appreciated that a debossing technique may generate either of a recessed optical microstructure or a proud optical microstructure, relative to the first surface of first layer, based on the design of the template used during the debossing technique.

Returning to method 200, after arranging the first layer within the cavity of the forming chamber at step 205, a thermoset material (for the second layer being a thermoset layer) can be flowed into the cavity of the forming chamber and into contact with the first surface of the first layer. In an example, the thermoset material may be a thermoset monomer. At step 215 of method 200, the thermoset material is allowed to cure, thereby encapsulating the optical microstructures within the ophthalmic lens via a formed second layer (e.g., a thermoset layer).

In an optional embodiment, method 200 includes depositing, at step 220, a protective layer on an exposed surface of the ophthalmic lens. For instance, as in FIG. 3B, the exposed surface of the ophthalmic lens may be the second surface of the thermoplastic material. In another instance, as in FIG. 3D, the exposed surface of the ophthalmic lens may be a surface of a second layer of thermoset material that has been deposited on the second surface of the first layer. In an example, the protective layer may be a hard coating that provides certain abrasion-resistant and/or anti-scratch properties to the ophthalmic lens. The hard coating may be a Mithril hard coating (Essilor) and, in particular, based on a hydrolysate of γ-glycidoxypropyltrimethoxysilane (GLYMO) and dimethyldiethoxysilane (DIVIDES), with colloidal silica and aluminum acetyl acetonate. Further discussion of the protective layer will be described in greater detail with reference to remaining figures.

Exemplary ophthalmic lenses, resulting from the execution of method 200, will now be described with reference to FIG. 3A through FIG. 6B.

With reference to FIG. 3A, FIG. 4A, and FIG. 5A, an ophthalmic lens 301 may include a thermoplastic layer 302 and a thermoset layer 304. Optical microstructures 303 may be formed within/on a first surface 306 of the thermoplastic layer 302. As in FIG. 4A, the first surface 306 of the thermoplastic layer 302 may be processed such that the optical microstructures 303 thereon appear to be embossed on the first surface 306 of the thermoplastic layer 302. As can be appreciated, the optical microstructures 303 on the first surface 306 of the thermoplastic layer 302 are hemispherical and of a convex shape. Referring now to FIG. 5A, the first surface 306 of the thermoplastic layer 302 may be processed such that the optical microstructures 303 thereon appear to be debossed within the first surface 306 of the thermoplastic layer 302. As can be appreciated, the optical microstructures 303 on the first surface 306 of the thermoplastic layer 302 are hemispherical and of a concave shape.

In an embodiment, the thermoset layer 304 may be, generally, made of a crosslinked material (e.g., thermosetting materials). In particular, the thermoset layer 304 may be one obtained by polymerization of allyl derivatives such as the allyl carbonates of linear or branched aliphatic or aromatic polyols. This may further include diethylene glycol bis(allyl carbonate), isopropylene bis phenol-A bis(allyl carbonate), poly(meth)acrylates and copolymers based substrates, polythio(meth)acrylates, thermosetting polyurethanes, polythiourethanes, polyepoxides, polyepisulfides, as well as copolymers thereof and blends thereof. In an embodiment, the thermoset layer 304 may be an Orma^{®} (Essilor) substrate and the like, such as one obtained by (co)polymerizing bis allyl carbonate of diethylene glycol, marketed by PPG Industries as CR-39^{®}.

According to an embodiment, the thermoplastic layer 302 (i.e.: first layer/wafer) may be polycarbonate (PC) or poly(meth)acrylates (PMMA).

For instance, the materials that are suitable for forming the first thermoplastic layer 302 (i.e.: first layer) have the following Tg :

| **Material** | **Tg (°C)** |
|---|---|
| Polycarbonate (PC) | 145 |
| Polymethyl methacrylate(PMMA) | 125 |
| Cyclic-olefin copolymer (COC) | 125-135 |
| Polyamide (PA) | 140 |
| Polymethyl-pentene (PMP) | 115-120 |
| Polyethylene-naphthalene (PEN) | 120-125 |
| Polyethylene terephthalate (PET) | 78-85 |
| Copolyester (CPE) | 100-120 |

With reference now to FIG. 3B, the ophthalmic lens 301 of FIG. 3A may be further modified to include, on the second surface 307 of the thermoplastic layer 302, a protective layer 308. The protective layer 308 may be at least one of, among others, a urethane coating, an acrylic coating, an epoxy coating, a scratch-resistant coating, an antireflective coating, a photochromic coating, an anti-smudge coating, an anti-fog coating, a tintable coating, a self-healing coating, an anti-rain coating, an anti-static coating, an anti-UV coating, and an anti-blue light coating. For instance, the protective layer 308 may be a hard coating that provides certain abrasion-resistant and/or anti-scratch properties to the ophthalmic lens 301. An exposed surface 318 of the protective layer 308 may face an external environment of the ophthalmic lens 301. When the protective layer 308 is a hard coating, the hard coating may be a Mithril hard coating (Essilor). In particular, the hard coating may be based on a hydrolysate of γ-glycidoxypropyltrimethoxysilane (GLYMO) and dimethyldiethoxysilane (DIVIDES), with colloidal silica and aluminum acetyl acetonate. In an embodiment, the protective layer 308 may be a Mithril hard coating and may have a thickness of 3.5 µm.

In an example, the Mithril hard coating may have a refractive index of ∼1.5. In a particular instance, the Mithril hard coating has a refractive index of 1.6. The Mithril hard coating may have a thickness of between 3 µm and 6 µm and may be applied to the ophthalmic lens 301 by dip coating and the like.

With reference to FIG. 3C, FIG. 4B, and FIG. 5B, an ophthalmic lens 301 may include a thermoplastic layer 302, a first thermoset layer 304, and a second thermoset layer 304'. The first thermoset layer 304 may be formed on a first surface 306 of the thermoplastic layer 302, as in previous examples. Further, the second thermoset layer 304' may be formed on a second surface 307 of the thermoplastic layer 302. Optical microstructures 303 may be formed within/on a first surface 306 of the thermoplastic layer 302. As in FIG. 4B, the first surface 306 of the thermoplastic layer 302 may be processed such that the optical microstructures 303 thereon appear to be embossed on the first surface 306 of the thermoplastic layer 302. As can be appreciated, the optical microstructures 303 on the first surface 306 of the thermoplastic layer 302 are hemispherical and of a convex shape. Referring now to FIG. 5B, the first surface 306 of the thermoplastic layer 302 may be processed such that the optical microstructures 303 thereon appear to be debossed within the first surface 306 of the thermoplastic layer 302. As can be appreciated, the optical microstructures 303 on the first surface 306 of the thermoplastic layer 302 are hemispherical and of a concave shape.

In an embodiment, the first thermoset layer 304 and the second thermoset layer 304' may be, generally, made of a crosslinked material (e.g., thermosetting materials). In particular, the first thermoset layer 304 and the second thermoset layer 304' may be one obtained by polymerization of allyl derivatives such as the allyl carbonates of linear or branched aliphatic or aromatic polyols. This may further include diethylene glycol bis(allyl carbonate), isopropylene bis phenol-A bis(allyl carbonate), poly(meth)acrylates and copolymers based substrates, polythio(meth)acrylates, thermosetting polyurethanes, polythiourethanes, polyepoxides, polyepisulfides, as well as copolymers thereof and blends thereof. In an embodiment, the thermoset layer 304 may be an Orma^{®} (Essilor) substrate and the like, such as one obtained by (co)polymerizing bis allyl carbonate of diethylene glycol, marketed by PPG Industries as CR-39^{®}. It may be appreciated that specific materials described for the thermoplastic layer 302, the first thermoset layer 304, and the second thermoset layer 304' may be exchanged or replaced with the other material, such as the thermoplastic layer 302 being a thermoset layer 302, or the first thermoset layer 304 being a first thermoplastic layer 304, or the second thermoset layer 304' being a second thermoplastic layer 304', among other combinations.

With reference now to FIG. 3D, the ophthalmic lens 301 of FIG. 3C may be further modified to include, on a surface 314 of the second thermoset layer 304', a protective layer 308. The protective layer 308 may be at least one of, among others, a urethane coating, an acrylic coating, an epoxy coating, a scratch-resistant coating, an antireflective coating, a photochromic coating, an anti-smudge coating, an anti-fog coating, a tintable coating, a self-healing coating, an anti-rain coating, an anti-static coating, an anti-UV coating, and an anti-blue light coating. For instance, the protective layer 308 may be a hard coating that provides certain abrasion-resistant and/or anti-scratch properties to the ophthalmic lens 301. An exposed surface 318 of the protective layer 308 may face an external environment of the ophthalmic lens 301.

When the protective layer 308 is a hard coating, the hard coating may be a Mithril hard coating (Essilor). In particular, the hard coating may be based on a hydrolysate of γ-glycidoxypropyltrimethoxysilane (GLYMO) and dimethyldiethoxysilane (DIVIDES), with colloidal silica and aluminum acetyl acetonate. In an embodiment, the protective layer 308 may be a Mithril hard coating and may have a thickness of 3.5 µm.

In an example, the Mithril hard coating may have a refractive index of ∼1.5. In a particular instance, the Mithril hard coating has a refractive index of 1.6. The Mithril hard coating may have a thickness of between 3 µm and 6 µm and may be applied to the ophthalmic lens 301 by dip coating and the like.

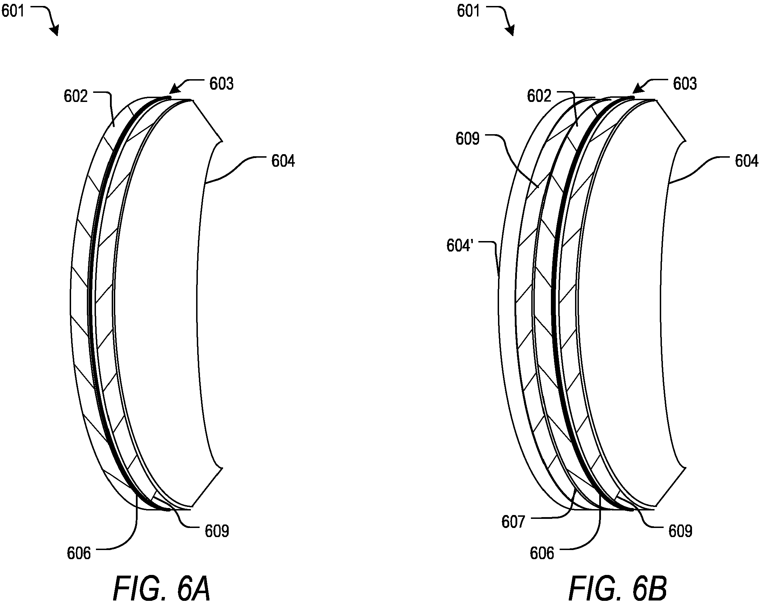

Turning now to FIG. 6A and FIG. 6B, method 200 may be improved by the addition of adhesion-promoting layers, or bonding layers, that strengthen the interface between layers of the ophthalmic lens. Accordingly, FIG. 6A and FIG. 6B describe an ophthalmic lens 601 formed with the aid of adhesion-promoting layers.

First, with reference to FIG. 6A, the ophthalmic lens 601 includes, as similarly presented in FIG. 3A, FIG. 4A, and FIG. 5A, a thermoset layer 604 and a thermoplastic layer 602, the thermoplastic layer 602 having optical microstructures 603 on a first surface 606 thereof. Further, the ophthalmic lens 601 may include an adhesion-promoting layer 609 disposed on the first surface 606 of the thermoplastic layer 602. The adhesion-promoting layer 609 may or may not be in contact with the optical structures 603 on the first surface 606 of the thermoplastic layer 602. In an example, the adhesion-promoting layer 609 may be, among others, an adhesive system such as a pressure-sensitive adhesive or a hot-melt adhesive, a surface activation method via corona, or a surface activation method via plasma or ozone. In an example, the adhesion-promoting layer 609 may be a primer coating comprising an acrylic monomer or a mixture of acrylic monomers and an alkoxysilane having a reactive group selected from the group comprising allyl, vinyl, acrylic, thiol, isocyanate, epoxy, and amine and a photoactive catalyst including a cationic photoinitiator such as UVI-6976 and a free radical photoinitiator such as DAROCUR 1173.

Second, with reference to FIG. 6B, the ophthalmic lens 601 includes, as similarly presented in FIG. 3C, FIG. 4B, and FIG. 5B, a first thermoset layer 604, a second thermoset layer 604', and a thermoplastic layer 602, the thermoplastic layer 602 having optical microstructures 603 on a first surface 606 thereof. As in FIG. 6A, the ophthalmic lens 601 may further include adhesion-promoting layers 609 disposed on the first surface 606 of the thermoplastic layer 602 and a second surface 607 of the thermoplastic layer 602. The adhesion-promoting layers 609 may be configured for contact with the first thermoset layer 604 and the second thermoset layer 604', respectively. An adhesion-promoting layer between the first thermoset layer 604 and the thermoplastic layer 602 may or may not be in contact with the optical microstructures 603 on the first surface 606 of the thermoplastic layer 602. In an example, the adhesion-promoting layers 609 may be, among others, an adhesive system such as pressure-sensitive adhesive or a hot-melt adhesive, a surface activation method via corona, or a surface activation method via plasma or ozone. In an embodiment, the thermoplastic layer 602 may instead be another thermoset layer.

Again, it may be appreciated that specific materials described for the thermoplastic layer 602, the first thermoset layer 604, and the second thermoset layer 604' may be exchanged or replaced with the other material, such as the thermoplastic layer 602 being a thermoset layer 602, or the first thermoset layer 604 being a first thermoplastic layer 604, or the second thermoset layer 604' being a second thermoplastic layer 604', among other combinations.

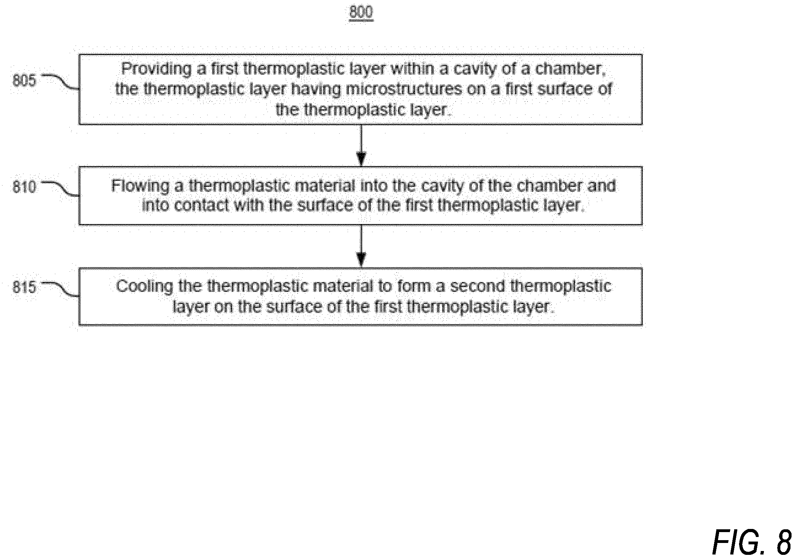

FIG. 8 provides a description of method 800 for forming an ophthalmic lens having optical microstructures encapsulated therein according to another embodiment in which two thermoplastic layers having different glass transition temperatures are used instead of a thermoset and thermoplastic layer having different glass transition temperatures.

At step 805 of method 800, a first thermoplastic layer may be provided within a cavity of a forming chamber, such as that described with reference to FIG. 1. The thermoplastic layer can have optical microstructures formed on a first surface of the first thermoplastic layer. In step 810 of method 800, a thermoplastic material can be flowed into a cavity of the forming chamber and into contact with a surface of a first thermoplastic material creating a second thermoplastic layer. At step 815, the second thermoplastic material is cooled to form the lens encapsulating the microstructures. When the material flowed into the cavity of the forming chamber is a second thermoplastic, a glass transition temperature of the first thermoplastic layer is higher than a glass transition temperature of the second thermoplastic layer, and the first thermoplastic layer and the second thermoplastic layer have compatible functional groups. In an example, the first thermoplastic layer maybe a bisphenol-A polycarbonate with a glass transition temperature of 147°C with the second thermoplastic layer of PMMA having a glass transition temperature of 120°C and of compatible functional groups.

Ophthalmic lenses fabricated according to the above-described processes will now be described, where exemplary lenses are fabricated and evaluated by standard techniques.

### Examples

Experiments included casting a thermoset material (MR 7 having an e-line refractive index of 1.665) with a thermoplastic wafer (PC having an e-line refractive index of 1.591). Materials used are as in Table 1.

**Table 1: CAS Numbers of Compounds Used**

| **Component (Catalog)** | **Component (Name)** | **Composition (wt.%, ppm)** |
|---|---|---|
| 3634-83-1 | MR 7 A (m-xylylene diisocyanate) | 52.1% |
| 131538-00-6 | MR 7 B (2,3-bis((2-mercaptoethyl)thio)-1-propanethiol) | 47.9% |
| 753-73-1 | Dimethyltin dichloride (DMC) | 100 |
| 2440-22-4 | Seesorb 701 2-(2-Hydroxy-5-methylphenyl)benzotriazole (UV 701) | 12500 |
| 3896-11-5 | Zelec UN | 1000 |
| N/A | Diaresin J masterbatch at 0.01 %wt in MR7 B | 8000 |

First trials were performed with PC semi-finished lenses (Base 3.25) bearing optical microstructures, or microlenses, patterned on their back side. The semi-finished lens was reduced by surfacing to obtain a thickness appropriate for use as the wafer. Following surfacing, the wafer was cleaned with isopropyl alcohol to remove dust and contamination. The wafer was then paired with a standard mineral back mold (80 mm) and tapered at the desired center thickness. In other words, with reference to FIG. 1, the wafer forms the concave mold insert 141, the standard mineral back mold forms the convex mold insert 142, and the space therebetween determines the desired center thickness. The standard mineral back mold may be a standard MR 7 mold.

In this example, the thermoset material is a monomer blend. The monomer blend may be manufactured by weighing and mixing the ingredients of Table 1. The mixing may include application of nitrogen gass under a vacuum connection. The mixing may include, first, adding monomer MR 7 A, followed by DMC, UV 701, and Zelec UN. The combination may be mixed under vacuum until homogeneous. Then, the mixer can be cooled. Following cooling, MR7 B and bluing agent can be added and mixed under vacuum.

The previously prepared mold (i.e., wafer and standard mineral back mold), can be filled with the prepared thermoset monomer using a cleaned syringe, and the polymerization can be realized in a regulated electronic oven. For instance, the polymericzation reaction can be carried out in an electronic oven according to the following cycle: (1) 12 hours at -10-20°C, (2) regular temperature increases from 20°C to 120°C during 7 hours at a rate of ∼5°C/hour to 25°C/hour, and (3) 4 hours at -100-120°C. After polymerization, the assemblies are removed from the oven and the standard mineral back mold can be disassembled. The thermoplastic layer, or concave mold insert 141, is now part of the final lens.

After disassembly, the ophthalmic lens and the convex mold insert are cleaned. The ophthalmic lens is immersed and sonicated in a surfactant solution, rinsed, and dried. The convex mold insert is cleaned in hot concentrated sulfuric acid and rinsed with water.

The formed ophthalmic lenses were then evaluated according to traditional testing techniques. For instance, the measurements include percent (%) transmission, a measurement of the light that passes through the material, ultraviolet cut, a measurement of a highest wavelenght for which the transmittance is lower than 1%, yellow index (YI), a colorimetric calculation from tristimulus values (X, Y, Z) (according to ASTM D1003 standard), and optics including micro-lenses power (e.g., center, global, peripheral), Rx powers (e.g., sphere, cylinder, cylinder axis), lens geometrical center, micro-lenses network center, and Rx optical center. Such optics, and other lens characteristics, can be measured by software and hardware systems dedicated to such purpose.

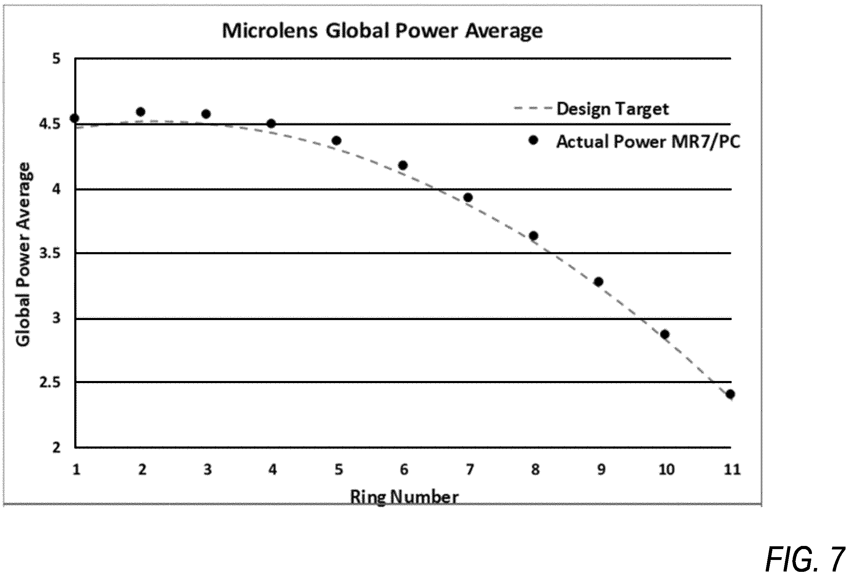

Results of an ophthalmic lens prepared according to the methods described herein are shown in Table 2, where the value of each listed property is shown to meet established lens performance requirements. Most importanly, the global power averages of the microlenses as measured by an imaging device (such as such as using Essilor's analytical tool called Jarvis Clear-Reader) are in agreement with a design target illustrated in FIG.7. According to the invention, the "global average power" measures the optical power profile of the microlenses of the ophthalmic lens. According to exemplified embodiment, the microlenses are arranged in concentric rings, such as R01 to R11 (pattern of the optical microstructures) and the microlenses located into one ring (such as R01) form a set of microlenses. In this case, the set of microlenses taken into account for averaging the global power corresponds to all the microlenses located in the same "ring".

**Table 2: Properties of an Ophthalmic Lens**

| **Properties** | **Values** |
|---|---|
| TvD65 (%) | 87.0 |
| UV cut (nm) | 398 |

As can be appreciated from the above, methods of the present disclosure enable production of thermoset lenses having similar myopia control and other functions as has been developed for thermoplastics. This development is critical for consumer access to innovative products independent of materials.

Example 1 (invention) - Experiments included overmolding a thermoplastic wafer (PC) with a thermoplastic material (PMMA).

A Ø76 mm CT 1.1 mm piano PC wafer with convex optical microstructures (microlenses) on the concave surface was produced by injection molding using Sabic Lexan^{™} OQ3820, a bisphenol-A polycarbonate having a refractive index of 1.591 and a glass transition temperature of approximately 147°C. With reference to FIG. 1, the wafer 102 was (such as, but not limited to, e.g., a thermoplastic wafer or a thermoset wafer) disposed against the concave surface of a standard chrome-plated concave mold insert 141, a standard chrome-plated steel insert formed the convex mold insert 142, and the space between determined the desired thickness. Encapsulation of the microlenses was performed using Roehm America ACRYLITE^{®} hw55 PMMA having a refractive index of 1.513 and a glass transition temperature of 120°C. The melt and mold temperatures for the overmolding process were set at 240°C and 100°C, respectively. The microlens powers of the resulting PC/PMMA composite lens were measured using an imaging device.

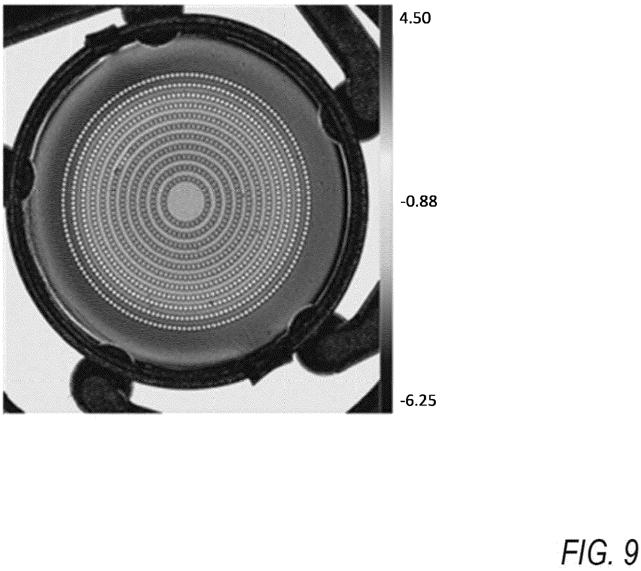

FIG. 9 is an optical image of the PC/PMMA composite lens, according to an embodiment of the present disclosure. As seen in FIG. 9, the image of the composite lens shows very well-defined boundaries between the microlenses and the base lens and the global power averages of the microlenses in each ring were as expected. This therefore suggests that the microlens shape integrity was preserved. Further, the PC/PMMA composite lens was put through HMC and Rx surfacing/edging processes without resulting in separation of the two layers, which is an indication of a strong bonding between PC and PMMA. The results also proved that PC and PMMA are compatible due to a similar ester group in their repeating chemical structure units.

Example 2 (comparative example) - A Ø76 mm CT 1.1 mm plano ACRYLITE^{®} hw55 PMMA wafer (Tg of 120°C) with concave microlenses on the concave surface was produced by injection molding. Following the process described in Example 1, encapsulation of the microlenses was performed using Lexan^{™} OQ3820 PC (Tg of 147°C). The melt and mold temperatures for the overmolding process were set at 270°C and 110°C, respectively.

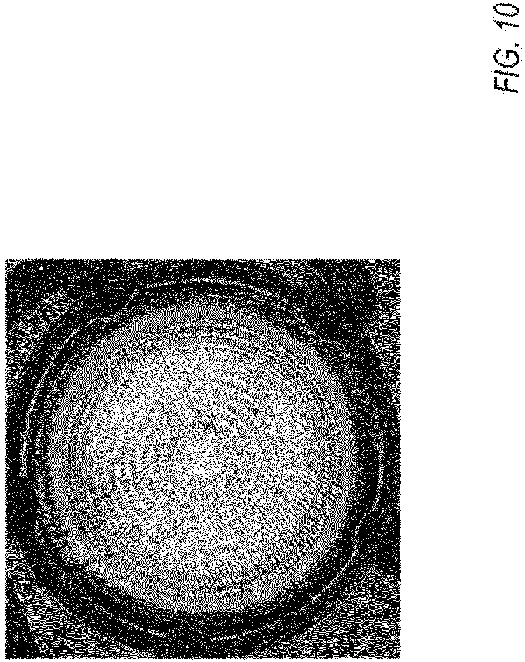

FIG. 10 is an optical image of the PC/PMMA composite lens as comparative example. As seen in FIG. 10, unlike the PC/PMMA case in Example 1, the image of the composite lens showed fuzzy boundaries between the microlenses and the base lens. The global power averages of the microlenses in each ring were not measurable. The results suggested that the microlenses were deformed and inter-diffusion occurred at the PMMA/PC interface. Nevertheless, the PC/PMMA composite lens went through Rx surfacing/edging processes without delamination indicating a strong bonding between PMMA and PC due to a similar ester group in their repeating chemical structure units.

Example 3 (invention) - Experiments included overmolding a thermoplastic wafer (PC) with a thermoplastic material (Durabio).

A Ø76 mm CT 1.1 mm piano PC wafer with convex microlenses was produced by injection molding using Sabic Lexan^{™} OQ3820, a bisphenol-A polycarbonate having an e-line refractive index of 1.591 and a glass transition temperature about 147°C. With reference to FIG. 1, the wafer 102 was (such as, but not limited to, e.g., a thermoplastic wafer or a thermoset wafer) disposed against the concave surface of a standard chrome-plated concave mold insert 141, a standard chrome-plated steel insert formed the convex mold insert 142, and the space between determined the desired thickness. Encapsulation of the microlenses was performed by injecting in Mitsubishi Chemical Corporation DURABIO^{™} D7340R, a bio-based isosorbide polycarbonate having a refractive index of 1.507 and a glass transition temperature of 125°C, into the mold. The melt and mold temperatures for the injection overmolding process were set at 240°C and 100°C, respectively.

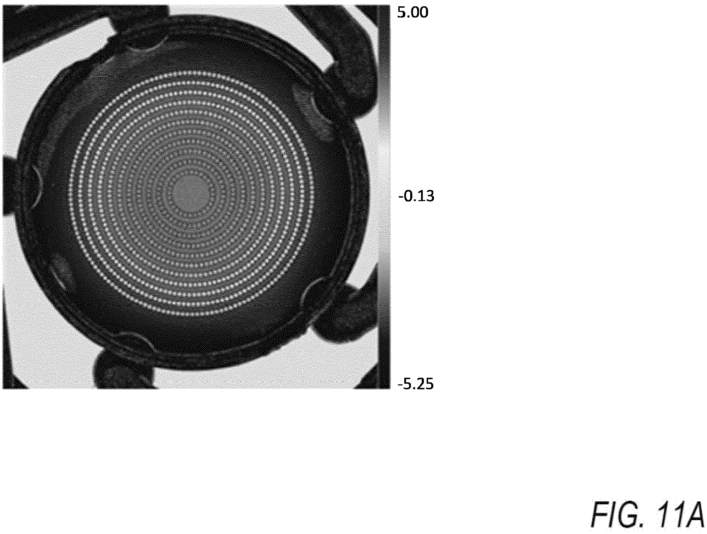

FIG. 11A is an optical image of the PC/Durabio composite lens, according to an embodiment of the present disclosure. As seen in FIG. 11A, the image of the composite lens shows very well-defined boundaries between the microlenses.

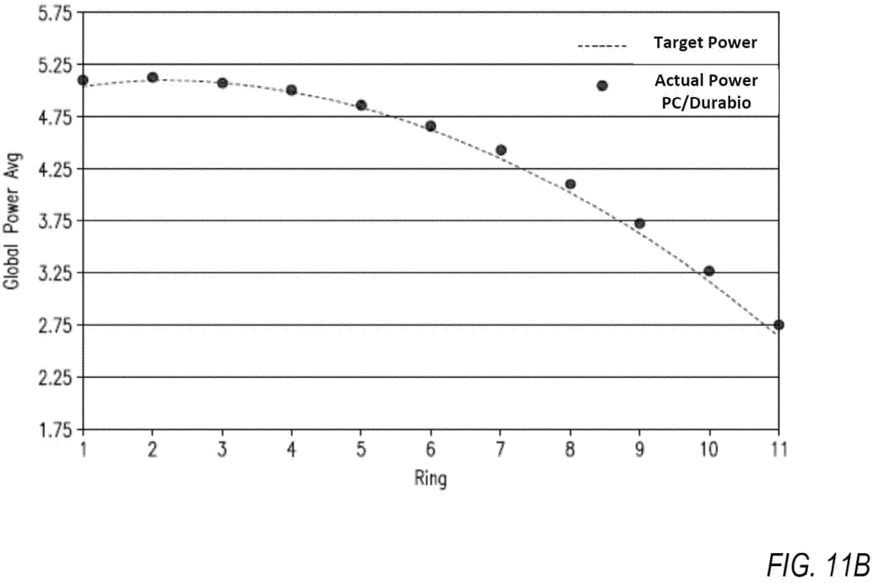

FIG. 11B is a graph of the global power average of the microlenses in each ring of an ophthalmic lens, according to an embodiment of the present disclosure. In an embodiment, the microlens powers of the resulting PC/Durabio composite lens were measured using an imaging device. The global power averages of the microlenses are in agreement with a design target illustrated in FIG. 11B. Further, the PC/Durabio composite lens went through HMC and Rx surfacing/edging processes without delamination indicating a strong bonding between PC and Durabio. The results also proved that PC and Durabio are compatible owing to a similar carbonate ester group in their repeating chemical structure units.

Example 4 (comparative example) - A Ø76 mm CT 1.1 mm piano DURABIO^{™} D7340R wafer (Tg of 125°C) with concave microlenses on the concave surface was produced by injection molding. Following the process described in Example 3, encapsulation of the microlenses was performed using Lexan^{™} OQ3820 PC (Tg of 147°C). The melt and mold temperatures for the injection overmolding process were set at 270°C and 110°C, respectively.

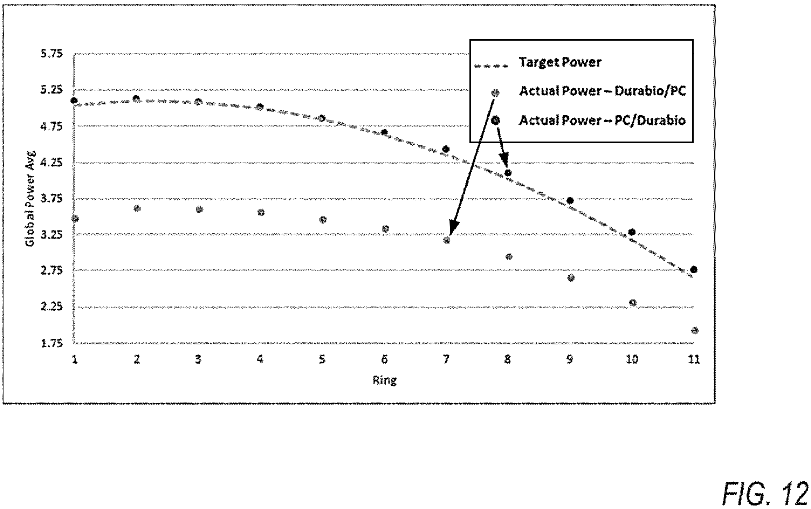

FIG. 12 is a graph of the global power average of the microlenses in each ring. The microlens powers of the resulting Durabio/PC composite lens were measured using an imaging device. As seen in FIG. 12, unlike the PC/Durabio case in Example 3, the global power averages of the microlenses in each ring were below expected results, suggesting that the microlens were flattened during injection overmolding. Nevertheless, the Durabio/PC composite lens went through Rx surfacing/edging processes without delamination indicating a strong bonding between the Durabio and PC due to a similar carbonate ester group in their repeating chemical structure units.

Obviously, numerous modifications and variations are possible in light of the above teachings. It is therefore to be understood that within the scope of the appended claims, embodiments of the present disclosure may be practiced otherwise than as specifically described herein.

Embodiments of the present disclosure may also be as set forth in the following parentheticals.
(1) An ophthalmic lens (601), comprising a first layer (602) having microstructures (603) on a first surface (606) of the first layer (602), the microstructures (603) on the first surface (606) of the first layer (602) being formed in a pattern, a material of the first layer (602) being a thermoplastic material; and a second layer (604) formed on the first surface (606) of the first layer (602), wherein a glass transition temperature of the first layer (602) is higher than a glass transition temperature of the second layer (604).
(2) The ophthalmic lens according to (1), wherein a refractive index of the first layer (602) is different from a refractive index of the second layer (604).
(3) The ophthalmic lens according to either (1) or (2), wherein each microstructure of the microstructures (603) is a positive power lenslet.
(4) The ophthalmic lens according to any one of (1) to (3), wherein a material of the second layer (604) is a thermoset material or a thermoplastic material.
(5) The ophthalmic lens according to any one of (1) to (4), further comprising an adhesion-promoting layer (609) deposited on the first surface (606) of the first layer (602) and between the first layer (602) and the second layer (604).
(6) The ophthalmic lens according to any one of (1) to (5), further comprising a third layer (604') disposed on a second surface (607) of the first layer (602), the second surface (607) of the first layer (602) being opposite the first surface (606) of the first layer (602), a material of the second layer (604) being a thermoset material, a material of the third layer (604') being a thermoset material.
(7) The ophthalmic lens according to any one of (1) to (6), further comprising an adhesion-promoting layer (609) deposited on the second surface (607) of the first layer (602) and between the first layer (602) and the third layer (604').
(8) The ophthalmic lens according to any one of (1) to (7), further comprising at least one of a protective layer (308) deposited on at least one of a second surface (607) of the first layer (602) and an exposed surface of the second layer (604), the second surface (607) of the first layer (602) being opposite the first surface (606) of the first layer (602) and the exposed surface of the second layer (604) being a surface of the second layer (604) that does not contact the first layer (602).
(9) A method for forming an ophthalmic lens having encapsulated lenslets, comprising providing a first layer (602) within a cavity of a forming chamber, the first layer (602) having microstructures (603) on a first surface (606) of the first layer (602), the microstructures (603) on the first surface (606) of the first layer (602) being formed in a pattern, a material of the first layer (602) being a thermoplastic material; flowing a second material into the cavity of the forming chamber and into contact with the first surface (606) of the first layer (602); and setting the second material to form a second layer (604) on the first surface (606) of the first layer (602), wherein a glass transition temperature of the first layer (602) is higher than a glass transition temperature of the second layer (604).
(10) The method according to (9), wherein a refractive index of the first layer (602) is different from a refractive index of the second layer (604).
(11) The method according to either of (9) or (10), wherein a material of the second layer (604) is a thermoset material or a thermoplastic material.
(12) The method according to any one of (9) to (11), further comprising depositing an adhesion-promoting layer (609) on the first surface (606) of the first layer (602) and between the first layer (602) and the second layer (604).
(13) The method according to any one of (9) to (12), further comprising depositing a protective layer (308) on at least one of a second surface (607) of the first layer (602) and an exposed surface of the second layer (604), the second surface (607) of the first layer (602) being opposite the first surface (606) of the first layer (602) and the exposed surface of the second layer (604) being a surface of the second layer (604) that does not contact the first layer (602).
(14) The method according to any one of (9) to (13), wherein the second material is a thermoset material, flowing the second material into the cavity of the forming chamber further comprises flowing the second material into the cavity of the forming chamber and into contact with the first surface (606) of the first layer (602) and a second surface (607) of the first layer (602), the second surface (607) of the first layer (602) being opposite the first surface (606) of the first layer (602), and setting the second material further comprises curing the second material to form the second layer (604) on the first surface (606) of the first layer (602) and a third layer (604') on the second surface (607) of the first layer (602).
(15) The method according to any one of (9) to (14), wherein the first layer (602) and the second layer (604) have compatible functional groups.
(16) A method for forming an ophthalmic lens having encapsulated lenslets, comprising providing a first layer (602) within a cavity of a forming chamber, the first layer (602) having microstructures (603) on a first surface (606) of the first layer (602), the microstructures (603) on the first surface (606) of the first layer (602) being formed in a pattern, flowing a thermoplastic material into a cavity of a forming chamber and into contact with a surface of the first layer, and cooling the thermoplastic material to form a second layer on the surface of the first layer, wherein a glass transition temperature of the first layer is higher than a glass transition temperature of the second layer, and the first layer and the second layer have compatible functional groups.
(17) The method according to (16), wherein a refractive index of the first layer is different from a refractive index of the second layer.
(18) The ophthalmic lens according to any one of (1) to (8), wherein each microstructure is a convex lenslet or a concave lenslet.
(19) The ophthalmic lens according to any one of (1) to (8), wherein the protective layer (308) comprises at least one of a urethane coating, an acrylic coating, an epoxy coating, a scratch-resistant coating, an antireflective coating, a photochromic coating, an anti-smudge coating, an anti-fog coating, a tintable coating, a self-healing coating, an anti-rain coating, an anti-static coating, an anti-UV coating, and an anti-blue light coating.
(20) An ophthalmic lens (601), comprising a first layer (602) having microstructures (603) on a first surface (606) of the first layer (602), the microstructures (603) on the first surface (606) of the first layer (602) being formed in a pattern, a material of the first layer (602) being a thermoset material; and a second layer (604) formed on the first surface (606) of the first layer (602), wherein a glass transition temperature of the first layer (602) is higher than a glass transition temperature of the second layer (604).

Thus, the foregoing discussion discloses and describes merely exemplary embodiments of the present disclosure. As will be understood by those skilled in the art, the present disclosure may be embodied in other specific forms without departing from the spirit or essential characteristics thereof. Accordingly, embodiments of the present disclosure are intended to be illustrative, but not limiting of the scope of the disclosure, as well as other claims. The disclosure, including any readily discernible variants of the teachings herein, defines, in part, the scope of the foregoing claim terminology such that no inventive subject matter is dedicated to the public.

## Claims

1. An ophthalmic lens (301; 601), comprising:
a first layer (302; 602) having microstructures (303; 603) on a first surface (306; 606) of the first layer (302; 602), the microstructures (303; 603) on the first surface (306; 606) of the first layer (302; 602) being formed in a pattern, a material of the first layer (302; 602) being a thermoplastic material; and
a second layer (304; 604) formed on the first surface (306; 606) of the first layer (302; 602), wherein
a glass transition temperature of the first layer (302; 602) is higher than a glass transition temperature of the second layer (304; 604).

2. The ophthalmic lens according to claim 1, wherein a refractive index of the first layer (302; 602) is different from a refractive index of the second layer (304; 604).

3. The ophthalmic lens according to claim 1 or 2, wherein each microstructure of the microstructures (303; 603) is a positive power lenslet.

4. The ophthalmic lens according to any one of the preceding claims, wherein a material of the second layer (304; 604) is a thermoset material or a thermoplastic material.

5. The ophthalmic lens according to any one of the preceding claims, further comprising
an adhesion-promoting layer (609) deposited on the first surface (606) of the first layer (602) and between the first layer (602) and the second layer (604).

6. The ophthalmic lens according to any one of the preceding claims, further comprising
a third layer (604') disposed on a second surface (607) of the first layer (602), the second surface (607) of the first layer (602) being opposite the first surface (606) of the first layer (602), a material of the second layer (604) being a thermoset material, a material of the third layer (604') being a thermoset material.

7. The ophthalmic lens according to claim 6, further comprising
an adhesion-promoting layer (609) deposited on the second surface (607) of the first layer (602) and between the first layer (602) and the third layer (604').

8. The ophthalmic lens according to any of the preceding claims, further comprising
at least one of a protective layer (308) deposited on at least one of a second surface (307) of the first layer (302) and an exposed surface of the second layer (304), the second surface (307) of the first layer (302) being opposite the first surface (306) of the first layer (302) and the exposed surface of the second layer (304) being a surface of the second layer (304) that does not contact the first layer (302).

9. A method for forming an ophthalmic lens (301; 601) having encapsulated lenslets, comprising:
providing a first layer (302; 602) within a cavity (150) of a forming chamber, the first layer (302; 602) having microstructures (303; 603) on a first surface (306; 606) of the first layer (302; 602), the microstructures (303; 603) on the first surface (306; 606) of the first layer (302; 602) being formed in a pattern, a material of the first layer (302; 602) being a thermoplastic material;
flowing a second material into the cavity (150) of the forming chamber and into contact with the first surface (306; 606) of the first layer (302; 602); and
setting the second material to form a second layer (304; 604) on the first surface (306; 606) of the first layer (302; 602),
wherein a glass transition temperature of the first layer (302; 602) is higher than a glass transition temperature of the second layer (304; 604).

10. The method according to claim 9, wherein a refractive index of the first layer (302; 602) is different from a refractive index of the second layer (304; 604).

11. The method according to claim 9 or 10, wherein a material of the second layer (304; 604) is a thermoset material or a thermoplastic material.

12. The method according to any one of the preceding claims 9 to 11, further comprising depositing an adhesion-promoting layer (609) on the first surface (606) of the first layer (602) and between the first layer (602) and the second layer (604).

13. The method according to any one of the preceding claims 9 to 12, further comprising
depositing a protective layer (308) on at least one of a second surface (307) of the first layer (302) and an exposed surface of the second layer (304), the second surface (307) of the first layer (302) being opposite the first surface (306) of the first layer (302) and the exposed surface of the second layer (304) being a surface of the second layer (304) that does not contact the first layer (302).

14. The method according to any one of the preceding claims 9 to 13, wherein
the second material is a thermoset material,
flowing the second material into the cavity (150) of the forming chamber further comprises flowing the second material into the cavity (150) of the forming chamber and into contact with the first surface (606) of the first layer (602) and a second surface (607) of the first layer (602), the second surface (607) of the first layer (602) being opposite the first surface (606) of the first layer (302; 602), and
setting the second material further comprises curing the second material to form the second layer (604) on the first surface (606) of the first layer (602) and a third layer (604') on the second surface (607) of the first layer (602).

15. The method according to claim 14, wherein the first layer (302; 602) and the second layer (304; 604) have compatible functional groups.

## Amended claims

### Amended claims in accordance with Rule 137(2) EPC.

1. An ophthalmic lens (301; 601), comprising:
a first layer (302; 602) having microstructures (303; 603) on a first surface (306; 606) of the first layer (302; 602), the microstructures (303; 603) on the first surface (306; 606) of the first layer (302; 602) being formed in a pattern, a material of the first layer (302; 602) being a thermoplastic material; and
a second layer (304; 604) formed on the first surface (306; 606) of the first layer (302; 602), wherein
a glass transition temperature of the first layer (302; 602) is higher than a glass transition temperature of the second layer (304; 604),
**characterized in that** said ophthalmic lens (301; 601) comprises an adhesion-promoting layer (609) deposited on the first surface (606) of the first layer (602) and between the first layer (602) and the second layer (604).

2. The ophthalmic lens according to claim 1, wherein a refractive index of the first layer (302; 602) is different from a refractive index of the second layer (304; 604).

3. The ophthalmic lens according to claim 1 or 2, wherein each microstructure of the microstructures (303; 603) is a positive power lenslet.

4. The ophthalmic lens according to any one of the preceding claims, wherein a material of the second layer (304; 604) is a thermoset material or a thermoplastic material.

5. The ophthalmic lens according to any one of the preceding claims, further comprising
a third layer (604') disposed on a second surface (607) of the first layer (602), the second surface (607) of the first layer (602) being opposite the first surface (606) of the first layer (602), a material of the second layer (604) being a thermoset material, a material of the third layer (604') being a thermoset material.

6. The ophthalmic lens according to claim 5, further comprising
an adhesion-promoting layer (609) deposited on the second surface (607) of the first layer (602) and between the first layer (602) and the third layer (604').

7. The ophthalmic lens according to any of the preceding claims, further comprising
at least one of a protective layer (308) deposited on at least one of a second surface (307) of the first layer (302) and an exposed surface of the second layer (304), the second surface (307) of the first layer (302) being opposite the first surface (306) of the first layer (302) and the exposed surface of the second layer (304) being a surface of the second layer (304) that does not contact the first layer (302).

8. A method for forming an ophthalmic lens (301; 601) having encapsulated lenslets, comprising:
providing a first layer (302; 602) within a cavity (150) of a forming chamber, the first layer (302; 602) having microstructures (303; 603) on a first surface (306; 606) of the first layer (302; 602), the microstructures (303; 603) on the first surface (306; 606) of the first layer (302; 602) being formed in a pattern, a material of the first layer (302; 602) being a thermoplastic material;
flowing a second material into the cavity (150) of the forming chamber and into contact with the first surface (306; 606) of the first layer (302; 602); and
setting the second material to form a second layer (304; 604) on the first surface (306; 606) of the first layer (302; 602),
wherein a glass transition temperature of the first layer (302; 602) is higher than a glass transition temperature of the second layer (304; 604),
**characterized in that** said method further comprises .
depositing an adhesion-promoting layer (609) on the first surface (606) of the first layer (602) and between the first layer (602) and the second layer (604).

9. The method according to claim 8, wherein a refractive index of the first layer (302; 602) is different from a refractive index of the second layer (304; 604).

10. The method according to claim 8 or 9, wherein a material of the second layer (304; 604) is a thermoset material or a thermoplastic material.

11. The method according to any one of the preceding claims 8 to 10, further comprising
depositing a protective layer (308) on at least one of a second surface (307) of the first layer (302) and an exposed surface of the second layer (304), the second surface (307) of the first layer (302) being opposite the first surface (306) of the first layer (302) and the exposed surface of the second layer (304) being a surface of the second layer (304) that does not contact the first layer (302).

12. The method according to any one of the preceding claims 8 to 11, wherein
the second material is a thermoset material,
flowing the second material into the cavity (150) of the forming chamber further comprises flowing the second material into the cavity (150) of the forming chamber and into contact with the first surface (606) of the first layer (602) and a second surface (607) of the first layer (602), the second surface (607) of the first layer (602) being opposite the first surface (606) of the first layer (302; 602), and
setting the second material further comprises curing the second material to form the second layer (604) on the first surface (606) of the first layer (602) and a third layer (604') on the second surface (607) of the first layer (602).

13. The method according to claim 12, wherein the first layer (302; 602) and the second layer (304; 604) have compatible functional groups.
